Europäisches Patentamt

European Patent Office

Office européen des brevets

(11) Veröffentlichungsnummer: **0 220 547**

**A1**

(12) **EUROPÄISCHE PATENTANMELDUNG**

(21) Anmeldenummer: **86113786.7**

(22) Anmeldetag: **04.10.86**

(51) Int. Cl.⁴: **G01P 3/48**

(30) Priorität: **08.10.85 DE 3535842**

(43) Veröffentlichungstag der Anmeldung:
**06.05.87 Patentblatt 87/19**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Janetzke, Helmut, Dipl.-Ing.**
**Liegnitzerstrasse 4**
**D-7141 Schwieberdingen(DE)**

(74) Vertreter: **Kammer, Arno, Dipl.-Ing.**
**ROBERT BOSCH GmbH Zentralstelle Patente**
**2 Postfach 50**
**D-7000 Stuttgart 1(DE)**

(54) **Drehzahlmesswertgeberschaltung.**

(57) Es wird eine Meßwertgeberschaltung beschrieben, die ein der Drehgeschwindigkeit eines
Gegenstandes proportionales Signal abgibt. Diese
Schaltung besteht aus einem mit dem Gegenstand
sich drehenden Rotor mit Zähnen, einem den
Zähnen gegenüberstehenden Stator, der durch die
vorbeilaufenden Zähne verursachte Magnetfeldänderungen erfaßt und aus einer nachgeordneten
Schaltung.

Zur Erhöhung der Auflösung des Geschwindigkeitssignals wird die Ausgangsgröße des
Stators mehreren Vergleichern (7) zugeführt, denen
derartige unterschiedliche Vergleichswerte zugeführt
werden, daß bei gleichförmiger Drehung des Rotors
pro Zahnflanke eine Folge zeitlich gleichmäßig verteilten Impulsfolgen entsteht.

FIG.1

## Drehzahlmeßwertgeberschaltung

Die Erfindung betrifft eine Meßwertgeberschaltung, die ein der Drehgeschwindigkeit eines Gegenstandes proportionales Signal abgibt, bestehend aus einem mit dem Gegenstand sich drehenden Rotor mit Zähnen und einem den Zähnen gegenüberstehenden, die durch die vorbeilaufenden Zähne verursachte Magnetfeldänderungen erfassenden Stator, und einer nachgeschalteten Auswerteschaltung.

Es sind verschiedene Arten derartiger Meßwertgeber bekannt, wobei z.B. die aus permeablem Material bestehenden Zähne des Rotors entweder ein statorseitiges Magnetfeld verändern und damit einen Strom durch eine Statorwicklung modulieren oder rotorseitige Magnetzähne einen Strom statorseitig induzieren oder Hall-Sensoren beeinflussen.

Unter dem Ausdruck Zähne sollen alle rotorseitigen Ausbildungen verstanden werden, die beim Drehen des Rotors statorseitig ein Signal erzeugen, das der Drehgeschwindigkeit und der Zähnezahl proportional ist.

Will man eine hohe Auflösung der Drehgeschwindigkeit haben, wie dies z.B. bei Antiblockiersystemen notwendig ist, so muß man insbesondere wegen der kleinen Drehgeschwindigkeiten viele Zähne am Zahnrad vorsehen.

Bei dem Meßwertgeber gemäß den Merkmalen des Anspruch 1 kommt man bei gleicher Auflösung wie bisher mit einer geringeren Zähnezahl aus bzw. erhält bei gleicher Zähnezahl eine wesentlich verbesserte Auflösung.

Weitere Verbesserungen und Vorteile ergaben sich aus der folgenden Figurenbeschreibung.

Es zeigen:

Fig. 1 eine Prinzipskizze eines Ausführungsbeispiels der Erfindung,

Fig. 2 den Verlauf des Ausgangssignals des Gebers,

Fig. 3 und 4 Möglichkeiten der Ausbildung der Impulsformerschaltung der Fig. 1.

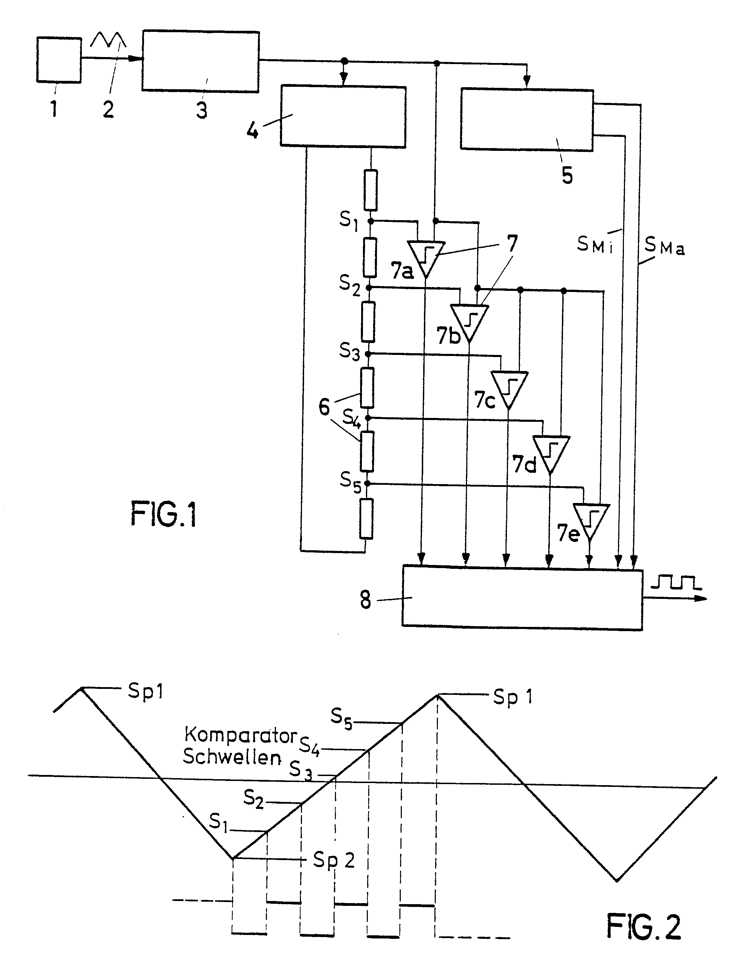

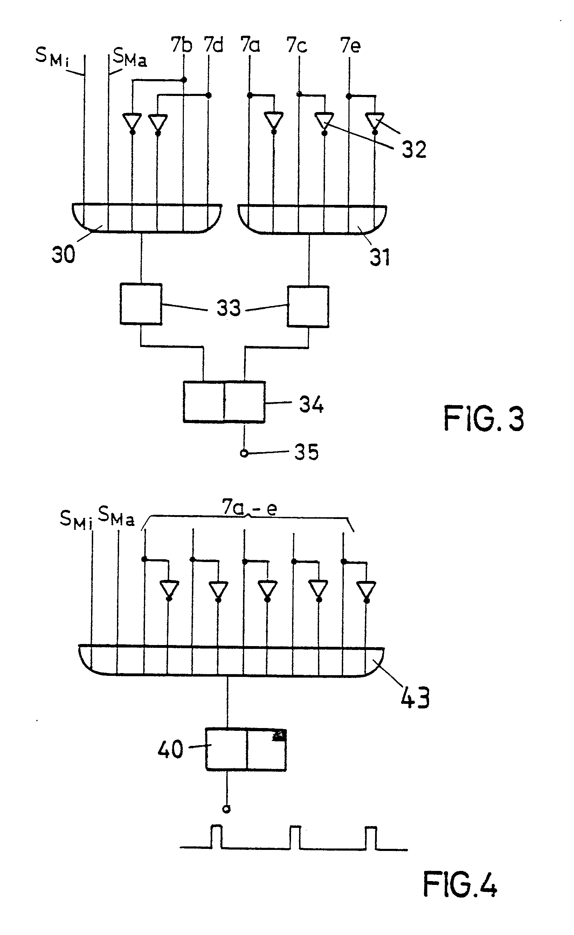

In Fig. 1 ist mit 1 ein Drehzahlmeßwertgeber, der aus Rotor und Stator besteht und der z.B. ein sägezahn-(dreieck-) förmiges Signal abgibt, bezeichnet. Dieses Signal durchläuft ein Filter 3 und wird dann einer Schaltung 4 zur Spitzenwerterfassung und einer Schaltung 5 zur Umkehrpunkterkennung zugeführt. Die Schaltung zur Spitzenwerterfassung erfaßt die aufeinanderfolgenden Spitzenwerte des vom Geber 1 kommenden Signals und speichert sie für eine Zeit ab. Beim Erreichen des Spitzenwerts $Sp$ 2 in Fig. 2, die einen Ausschnitt aus dem hier sägezahnförmig verlaufend angenommenen Ausgangssignal des Filters 3 zeigt (die Zähne seien entsprechend geformt) wird an einen aus den Widerständen 6 gebildeten Spannungsteiler der Spitzenwert $Sp$ 2 und der vorher gemessene und gespeicherte Spitzenwert $Sp$ 1 gelegt. Es sind Vergleicher 7a bis 7e vorgesehen, denen einmal das Ausgangssignal des Filters 3 und Vergleichswerte zugeführt werden, die am Spannungsteiler abgegriffen werden und Schwellenwerte $S_1$ bis $S_5$ bilden. Wird durch das Ausgangssignal des Filters 3 einer der Schwellenwerte $S_1$ bis $S_5$ überschritten, so gibt der Vergleicher ein Signal ab, das der Impulsformerstufe 8 zugeführt wird. Dieser wird aus der Umkehrpunkterkennungsschaltung 5, die zum Beispiel den Verlauf des Signals aus dem Filter 3 auf Auftreten eines Steigungswechsels mittels eines Differenzierglieds überwacht oder aber den Augenblickswert mit dem Spitzenwert vergleicht und bei Gleichheit den Umkehrpunkt anzeigt, auch beim Erreichen der Spitzenwerte je ein Signal $S_{Mi}$ und $S_{Ma}$ zugeführt. Die sieben Eingangssignale des Impulsformers 8 werden nun wie Fig. 3 zeigt, zwei Oder-Gattern 30 und 31 zugeführt und zwar die Signale $S_{Mi}$ und $S_{ma}$ nur direkt und die Signale der Vergleicher 7b und 7d jeweils direkt und invertiert (Inverter 32) dem Oder-Gatter 30 und die Signale der Vergleicher 7a, 7c und 7e jeweils direkt und invertiert dem Oder-Gatter 31.

Die Ausgänge der Oder-Gatter 30 und 31 sind über Differenzierer 33 mit den beiden Eingängen eines bistabilen Glieds 34 verbunden. Das Ausgangssignal des bistabilen Glieds 34 steht an einer Klemme 35 zur Verfügung.

Wird der Spitzenwert $Sp$ 2 erreicht, so bringt die Anstiegflanke des dann erzeugten Signals $S_{mi}$ das bistabile Glied 34 in die Stellung, in der das Ausgangssignal des bistabilen Glieds 34 (an Klemme 35) low ist (sh. Fig. 2 unten). Das Erreichen der Schwelle $S_1$ erzeugt ein Signal am Ausgang des Vergleichers 7a und das bistabile Glied gelangt durch dessen Anstiegsflanke in die Stellung, in der sein Ausagangssignal high ist. Dieser Wechsel geht weiter bis das Signal $S_{ma}$ bei Erreichen des Spitzenwerts $Sp$ 1 das Ausgangssignal an Klemme 35 wieder low macht. Das Unterschreiten der Schwelle $S_5$ auf der folgenden Zahnflanke bringt wegen des Inverters wieder ein high-Signal usw.

Wenn man die Schwelle $S_1$ bis $S_5$ im Vergleich zum Erreichen der Spitzenwerte entsprechend beeinflußt, erhält man bei einer gleichförmigen Drehung des Gegenstandes, mit dem der Rotor verbunden ist, eine mäanderförmig verlaufende Impulsfolge an Klemme 35.

Die Schwellen müssen dazu entsprechend geeicht werden, wobei dabei auch andere Zahnformen berücksichtigt werden können. Die Signale an Klemme 35 können in bekannter Weise z.B. zur Radgeschwindigkeitsmessung ausgenutzt werden. Die Frequenz des Nutzsignals ist bei dem gewählten Ausführungsbeispiel verdreifacht.

Alternativ zu der oben beschriebenen Ausführungsform können z.B. alle Spitzenwerte den einzelnen Zähnen zugeordnet abgespeichert sein und jeweils für die Messung am einzelnen Zahn abgerufen werden. Das System kann auch adaptiv arbeiten, d.h. die Schwellen werden solange z.B. mittels eines μ-Prozessers variiert, bis die gewünschte äquidistante Pulsfolge bei konstanter Drehzahl erreicht ist. Das Ausführungsbeispiel der Fig. 1 arbeitet analog; es ist jedoch auch eine digitale Ausführung möglich.

Schließlich wäre auch eine Ausgestaltung der Impulsformerschaltung 8 gemäß Fig. 4 denkbar. Hier ist ein monostabiles Glied 40 vorgesehen, das von den Anstiegsflanken der unbeeinflußten und der invertierten (Inverter 42) Ausgangssignale der fünf Vergleicher 7a-d jeweils angesteuert wird - (Oder-Gatter 43) und damit pro Flanke einen - schmalen Impuls erzeugt. Hier entstehen pro Flanke sechs äquidistant verteilte schmale Impulse, wobei z.B. der Abstand benachbarter Anstiegsflanken zur Geschwindigkeitsmessung ausgezählt werden kann.

## Ansprüche

1. Meßwertgeberschaltung, die ein der Drehgeschwindigkeit eines Gegenstandes proportionales Signal abgibt, bestehend aus einem mit dem Gegenstand sich drehenden Rotor mit Zähnen und einem den Zähnen gegenüberstehenden, die durch die vorbeilaufenden Zähne verursachte Magnetfeldänderungen erfassenden Stator und einer nachgeschalteten Auswerteschaltung, dadurch gekennzeichnet, daß die Ausgangsgröße des Stators - (2) mehreren Vergleichern (7) zugeführt wird, denen derartig unterschiedliche Vergleichswerte zugeführt werden, daß bei gleichförmiger Drehung des Rotors (2) pro Zahnflanke eine Folge von zeitlich gleichmäßig verteilten Impulsen entsteht.

2. Meßwertgeberschaltung nach Anspruch 1, dadurch gekennzeichnet, daß eine Einrichtung (5) zur Erkennung der Umkehrpunkte vorgesehen ist und daß nur für die dazwischen liegenden Werte Vergleicher (7) vorgesehen sind.

3. Meßwertgeberschaltung nach Anspruch 1 oder 2, dadurch gekennzeichnet, daß die Vergleichswerte aus den Spitzenwerten (Sp 1, Sp 2) abgeleitet werden.

4. Meßwertgeberschaltung nach Anspruch 3, dadurch gekennzeichnet, daß ein mehrteiliger Spannungsteiler (6) vorgesehen ist, an dem die Spitzenspannungswerte (Sp 1, Sp 2) anliegen und an dem die Vergleichswerte abgegriffen werden.

5. Meßwertgeberschaltung nach Anspruch 3 oder 4, dadurch gekennzeichnet, daß die Spitzenwerte (Sp 1, Sp 2) für die einzelnen Zähne abgespeichert sind.

6. Meßwertgeberschaltung nach Anspruch 3 oder 4, dadurch gekennzeichnet, daß jeweils der zuletzt erreichte und bestimmte Spitzenwert (Sp 1, Sp 2) und der nächstfolgende gespeicherte Spitzenwert als Spitzenwerte für die Vergleichswertfestlegung für eine Zahnflanke dienen.

7. Meßwertgeberschaltung nach einem der Ansprüche 1 bis 6, dadurch gekennzeichnet, daß die Schwelleneinstellung adaptiv erfolgt.

FIG.1

FIG.2

FIG.3

FIG.4

R. 20 237

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 8, Nr. 278 (P-322)[1715], 19. Dezember 1984; & JP-A-59 145 968 (CANON K.K.) 21-08-1984 * Insgesamt * | 1 | G 01 P 3/48 |
| A | --- | 2,4 | |
| X | EP-A-0 149 680 (FANUC LTD.) * Seite 5, Zeile 34 - Seite 8, Zeile 8; Figuren 6a,6b,7,8 * | 1 | |
| A | | 4 | |
| A | --- JOURNAL OF PHYSICS E. SCIENTIFIC INSTRUMENTS, Band 15, Nr. 12, 1982, Seiten 1271-1280, The Institute of Physics, London, GB; G.A.WOOLVET: "Diital transducers" * Seite 1275, Spalte 1, Zeilen 12-22; Figuren 6,7 * | 1,3,4 | **RECHERCHIERTE SACHGEBIETE (Int. Cl.4)** G 01 P G 01 D H 03 B |
| A | --- DE-A-2 907 865 (HITACHI LTD.) * Seite 19, Zeilen 7-10; Figur 6 * | 3 | |

Der vorliegende Recherchenbericht wurde für alle Patentansprüche erstellt.

| Recherchenort | Abschlußdatum der Recherche | Prüfer |
|---|---|---|
| DEN HAAG | 05-02-1987 | HANSEN P. |